(19) Europäisches Patentamt / European Patent Office / Office européen des brevets

(11) **EP 2 648 936 B1**

(12) **EUROPEAN PATENT SPECIFICATION**

(45) Date of publication and mention of the grant of the patent:
**22.06.2016 Bulletin 2016/25**

(21) Application number: **10792827.7**

(22) Date of filing: **06.12.2010**

(51) Int Cl.:
*B60L 1/00* (2006.01)    *B60L 7/10* (2006.01)
*B60H 1/00* (2006.01)    *B60L 11/18* (2006.01)
*B60H 1/32* (2006.01)    *B60W 10/30* (2006.01)
*B60W 20/00* (2016.01)

(86) International application number:
**PCT/EP2010/007390**

(87) International publication number:
**WO 2012/076026 (14.06.2012 Gazette 2012/24)**

(54) **A VEHICLE COMPRISING A REFRIGERATOR ARRANGEMENT**

FAHRZEUG MIT EINER KÜHLANORDNUNG

VÉHICULE COMPRENANT UN AGENCEMENT DE RÉFRIGÉRATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.10.2013 Bulletin 2013/42**

(73) Proprietor: **Volvo Lastvagnar AB**
**405 08 Göteborg (SE)**

(72) Inventors:
• **TEMPLIN, Peter**
  **S-421 60 Västra Frölunda (SE)**
• **BERGLUND, Sixten**
  **S-423 53 Torslanda (SE)**
• **ERIKSSON, Anders**
  **S-423 49 Torslanda (SE)**

(74) Representative: **Jönrup, Emil**
**Volvo Technology Corporation**
**Volvo Corporate Intellectual Property**
**Dept. BF14100, M1.7**
**405 08 Göteborg (SE)**

(56) References cited:
EP-A1- 1 935 712    EP-A1- 2 193 969
WO-A2-2009/087552    DE-A1- 4 123 843
US-A1- 2002 132 696

**Description**

TECHNICAL FIELD

The present invention relates to a vehicle comprising a refrigerator arrangement and a hybrid electric propulsion system having a control unit, a main power unit, an electrical motor-generator and an electrical storage system. The present invention further relates to a method for controlling energy recovered by means of regenerative braking during a braking period of such a vehicle.

BACKGROUND ART

Energy regeneration during braking of a vehicle is well-known. An electrical generator is then mechanically coupled to a drivetrain of the vehicle and arranged to generate electrical power, thus converting kinetical energy to electrical energy fed to an electric accumulator, such as a battery.

WO 2009/087552 discloses a vehicle according to the preambule of claim 1.

Document EP 1 935 712 discloses a vehicle system comprising a hybrid powertrain having an internal combustion engine, an electromotor/generator, and a battery, as well as a refrigerating unit. Upon operation request of the refrigerating unit to lower the temperature thereof, electrical power to drive an electromotor of the refrigerating unit is provided by the battery. An operation request can however by coincidence be received from the refrigerating unit during a time period when regenerated electrical power is available from a power generating function, in which case part of the regenerated electrical power can be made available to charge the battery, and part of the regenerated electrical power can be made available to the refrigeration system.

The problem with the solution according to the prior art is that energy is not regenerated optimally in certain situations, and improved fuel economy is thus achievable.

There is thus a need for an improved vehicle having a refrigerator arrangement that removes the above mentioned disadvantage.

SUMMARY OF THE INVENTION

The object of the present invention is to provide an inventive vehicle comprising a refrigerator arrangement and a hybrid electric propulsion system having a control unit, a main power unit, an electrical motor-generator and an electrical storage system, where the previously mentioned problems are at least partly avoided. This object is achieved by the features of the characterising portion of claim 1, wherein said control unit is arranged to, upon registering a vehicle braking demand, and upon registering that said electrical storage system exhibits an upper state of charge, or has the potential to reach said upper state of charge by means of regenerative braking during a predicted braking period, use at least part of the energy recovered by means of regenerative braking during a braking period following said braking demand to directly power said refrigerator arrangement.

The object of the invention is further achieved by a method for controlling energy recovered by means of regenerative braking during a braking period of a vehicle comprising an refrigerator arrangement and a hybrid electric propulsion system having a control unit, a main power unit, an electrical motor-generator and an electrical storage system, where the previously mentioned problems are partly avoided. This object is achieved by the features of the characterising portion of claim 14, wherein the method comprises the steps of registering a vehicle braking demand, registering that said electrical storage system exhibits an upper state of charge, or has the potential to reach said upper state of charge during a predicted braking period, and controlling energy recovered by means of regenerative braking during a braking period following said braking demand, such that at least part of said energy is used to directly power said refrigerator arrangement.

The inventive vehicle and method assures that vehicle potential and kinetic energy is not lost during braking of the vehicle due to the fact that the electrical storage system cannot be further charged. Hence, vehicle potential and kinetic energy is prevented from being converted to waste heat energy by means of friction brakes, hydraulic retarders, or the like. The inventive vehicle and method solves this problem by using regenerated vehicle potential and kinetic energy for powering a refrigerator arrangement of the vehicle in response to a braking demand of the vehicle in a situation where vehicle energy is estimated to otherwise be lost as waste energy in friction brakes or the like. The fuel economy is thereby improved.

The inventive vehicle and method also reduces energy conversion losses associated with the.electrical storage system. Charging and discharging an electrical storage system is always associated with energy conversion losses when converting for example vehicle kinetic energy to chemical energy in an electrical storage system, such as a battery and/or capacitor. The inventive vehicle and method solves this problem by using at least part of the energy recovered by means of regenerative braking during said braking period to directly power said refrigerator arrangement also when a state of charge of the electrical storage system does not exhibit an upper level, i.e., does not exhibit a state of charge corresponding to a fully charged electrical storage system, but is deemed to have the potential to reach said upper state of charge by means of regenerative braking during a predicted braking period. Consequently, instead of first converting regenerated energy to chemical energy of the electrical storage system and subsequently converting the chemical energy to electrical energy, regenerated energy is used to directly power the refrigerator arrangement, thus eliminating two energy conversion steps.

Further advantages are achieved by implementing one or several of the features of the dependent claims. The electrical storage system is estimated to reach said upper state of charge by means of regenerative braking during said predicted braking period, if a predicted amount of electrical energy converted from vehicle kinetic and/or potential energy during said predicted braking period by means of at least said electrical motor-generator equals or exceeds the predicted amount of electrical energy necessary to charge said electrical storage system to exhibit said upper state of charge at the end of said predicted braking period. The system thus compares an estimated decrease in vehicle kinetic and potential energy level during a predicted braking period with the estimated energy required to charge the electrical storage system to reach an upper state of charge.

According to a further advantageous aspect of the invention, the predicted amount of electrical energy converted from vehicle kinetic and/or potential energy is calculated based on vehicle total weight and reduction of vehicle speed during said predicted braking period, and/or vehicle total weight and reduction of vehicle altitude during said predicted braking period, and preferably including energy conversion losses. The energy conversion equations used for estimating reduction of kinetic and/or potential energy are $\Delta E = \dfrac{M \times (\Delta V)^2}{2}$, and $\Delta E = M \times G \times \Delta H$. On a flat road, reduction of vehicle altitude will not be taken into account in the energy calculation, and on an inclined road, both aspects are taken into account unless the speed is kept constant, in which case reduction of vehicle speed will not be taken into account. The conversion losses occur partly during energy conversion from kinetic and/potential energy to electrical energy in the electrical motor-generator, and partly during charging/discharging of the electrical storage system.

According to a further advantageous aspect of the invention, the predicted amount of electrical energy necessary to charge said electrical storage system to exhibit said Upper State of Charge at the end of said predicted braking period is calculated based on at least a state of charge of the electrical storage system at the beginning of said braking period, and preferably also a required charging profile of the electrical storage system. The charging profile of the electrical storage system determines a maximal allowable charging power over time that does not lead to overcharging or other damages due to rapid charging.

According to a further advantageous aspect of the invention, the control unit comprises a distribution system that determines a time-dependent distribution of said energy recovered by means of regenerative braking to at least said refrigerator arrangement and said electrical storage system, wherein said refrigerator arrangement is associated with a refrigerator arrangement distribution parameter, and said electrical storage system is associated with an electrical storage system distribution parameter. The relationship between said refrigerator arrangement distribution parameter and said electrical storage system distribution parameter is preferably a function of an actual state of charge level of the electrical storage system, where a relatively low level leads to larger distribution percentage towards the electrical storage system, and a relatively high level leads to larger distribution percentage towards the refrigerator arrangement. The relationship is preferably also dependent on actually recovered power over time, because both the refrigerator arrangement and the electrical storage system have limits with respect to the acceptable power level distributed thereto. This is dependent on a rated output power of an electrical motor driving for example a heat pump of the refrigerator arrangement, as well as a required charging profile of the electrical storage system. The relationship is also dependent on predicted recovered power as a function of time during said predicted braking period, because the level of regenerated power level is most likely not constant during the braking period. Finally, the temperature in refrigerator storage compartment is preferably also influencing the relationship, because a relatively high temperature within the storage compartment increases the urgency to power the refrigerator arrangement, and oppositely.

According to a further advantageous aspect of the invention, the control unit comprises a first parameter corresponding to a max temperature level of the refrigerator compartment, and a second parameter corresponding to a high temperature level of the refrigerator compartment, wherein said refrigerator arrangement distribution parameter is larger than said electrical storage system distribution parameter when the actual temperature level of the refrigerator compartment is lying between said max temperature level and said high temperature level. A larger distribution parameter corresponds to a larger percentage distribution parameter, i.e. a larger portion of the regenerated power is routed to thereto. Consequently, relatively more power is distributed to the refrigerator arrangement when there is a risk that the temperature level thereof will increase above the max temperature level. Additionally, the refrigerator arrangement distribution parameter is equal to said electrical storage system distribution parameter when the actual temperature of the refrigerator compartment is lower than said high temperature level. Hence, in this situation, the two power receivers are provided with equal amount of regenerated power.

According to a further advantageous aspect of the invention, if a power receiver cannot accept all recovered electrical power routed thereto according to the distribution parameter of that power receiver, the distribution system will be adjusted accordingly. Hence, only the maximal amount of acceptable power will be distributed to each power receiver in order to reduce losses and increase fuel-efficiency of the vehicle.

According to a further advantageous aspect of the invention, the vehicle comprises additional regenerative braking devices that are arranged to recover energy during said braking period, such as brake generators, or electrical retarders. In such configuration, each of the regenerative braking devices is preferably connected to the electrical storage system and the refrigerator arrangement.

According to a further advantageous aspect of the invention, the refrigerator arrangement is electrically operable and powered with electrical energy generated by means of at least regenerative braking by at least said electrical motor-generator. The refrigerator arrangement comprises an electrical motor that preferably drives a heat-pump of the refrigerator arrangement.

According to a further advantageous aspect of the invention, the energy recovered by means of said regenerative braking that directly powers said refrigerator arrangement is not stored in said electrical storage system before being distributed to said refrigerator arrangement. Hence, losses resulting from charging and discharging of the electrical storage system are eliminated.

According to a further advantageous aspect of the invention, the vehicle comprises a drive wheel assembly, and said refrigerator arrangement is connected to said drive wheel assembly by means of a mechanical power transfer arrangement, such as a chain drive, belt drive, shaft drive, or gear set drive, for powering said refrigerator arrangement with energy recovered by means of regenerative braking. The mechanical power transfer arrangement is preferably drivingly connected to the driveline, such that rotational power from the driveline can be transmitted via the mechanical power transfer arrangement to the heat-pump of the refrigerator arrangement. The connection between the mechanical power transfer arrangement and the driveline can be realised by means of a clutch unit, or a differential gear, or the like. Advantageously, the power level transmitted from the driveline to the refrigerator arrangement is variable and controlled by the control unit.

According to a further advantageous aspect of the invention, the hybrid electric propulsion system further has an electrical switching device connected to said electrical motor-generator, said electrical storage system, and said refrigerator arrangement, for distributing electrical power between said electrical motor-generator, said electrical storage system, and said refrigerator arrangement. The switching device, which can be implemented by power electronic components, allows reduced complexity of the electrical receivers, because they must no longer communicate with the control unit, and regulate the power consumption/charging level accordingly.

According to further advantageous aspect of the invention, the control unit is arranged to, upon registering that cooling of the refrigerator compartment is required, and upon prediction that braking of the vehicle will be demanded within a certain time period, inhibit operation of the refrigerator arrangement by means of electrical energy from said electrical storage system until energy recovered by means of regenerative braking during said predicted braking period can be used to directly power said refrigerator arrangement. This control logic leads to improved use of regenerated energy and reduced charging/discharging losses in the electrical storage system.

BRIEF DESCRIPTION OF THE DRAWINGS

The invention will be described in greater detail below with reference to the preferred embodiments shown in the drawings, in which

Figure 1 shows a schematic layout of a first embodiment of a vehicle having a hybrid electric propulsion system according to the invention;
Figure 2 illustrates the function of the invention by means of a simplified diagram;
Figure 3 shows an inventive layout comprising a switching device for managing the electrical power distribution;
Figure 4 illustrates the inventive effect of supplemental control logic of the invention;
Figure 5 shows a schematic layout of a second embodiment having a mechanically powered refrigerator unit.

DETAILED DESCRIPTION

In the following two embodiments of the invention are shown and described simply by way of illustration of how to carry out the invention.

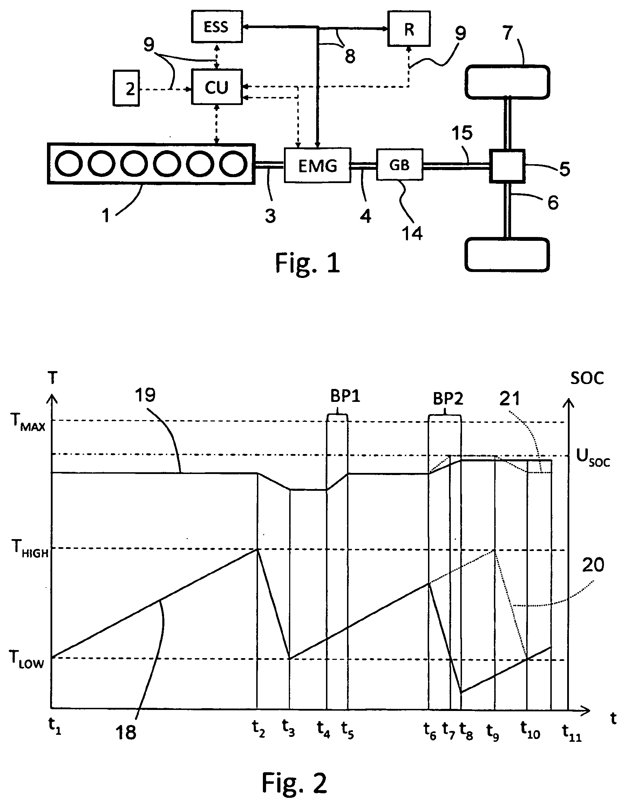

Figure 1 shows a schematic layout of a vehicle having a hybrid electric propulsion system, which comprises a control unit CU, a main power unit 1, an electrical motor-generator EMG and an electrical storage system ESS. The main power unit 1, which for example can be an internal combustion engine, such as a diesel engine, or a combustion turbine, is drivingly connected to the electrical motor-generator EMG by means of a first shaft 3, and the electrical motor-generator EMG is drivingly connected to a gearbox (GB) 14 by means of a second shaft 4. The gearbox is subsequently drivingly connected to drive wheels 7 of the vehicle via an output shaft 15, a differential gear unit 5, and drive shafts 6. The invention is not limited to this configuration of the hybrid electric propulsion layout, but can be varied according to the requirements of each application. For example, the main power unit 1, the electrical motor-generator EMG, and the gearbox 14 can be integrated into a single unit, and different versions of parallel and serial hybrid layouts are conceivable.

Hybrid electric propulsion systems and their function are well-known. Power is supplied to the drive wheels 7 from the main power unit 1 and/or the electrical motor-generator EMG, depending on the specific situation. The electrical storage system ESS is charged by either the main propulsion unit 1, or by regenerative braking of the electrical motor-generator EMG.

The electrical storage system ESS normally comprises a battery, a super capacitor, or a combination of a battery and a super capacitor. The available capacity remaining in the electrical storage system ESS is expressed as a percentage of the rated capacity. The electrical storage system ESS normally also comprises a management system for the electrical storage system ESS that communicates with the control unit CU, and indicates voltage, current, and temperature of the electrical storage system ESS, as well as estimating state-of-charge SOC and maximum allowable charge and discharge current thereof. The control unit CU controls charge and discharge of the electrical storage system ESS to keep SOC within a lower and upper state of charge, for example 40-80% in order to extend the service-life of the electrical storage system ESS. When the state of charge has reached the upper state of charge $U_{SOC}$, the electrical storage system ESS will be prevented from further charging.

The inventive vehicle further comprises a refrigerator arrangement R, which is either electrically operated with electricity from the electrical storage system ESS and/or the electrical motor-generator EMG, or mechanically operated by means of a mechanical power transfer arrangement 17 that connects the refrigerator arrangement R with the driveline of the vehicle, for example via the second shaft 4. The refrigerator arrangement R comprises a thermally insulated storage compartment for storing articles at a low temperature, and a heat pump for lowering the temperature inside the storage compartment. In case the refrigerator arrangement R is electrically operated, an electrical motor is drivingly connected to the heat pump.

The control unit CU controls the state of charge of the electrical storage system ESS, the operation of the refrigerator arrangement R, the electrical motor-generator EMG, the main power unit 1, and optionally also a clutch unit 16 of the mechanical power transfer arrangement 17. For this purpose, the control unit CU requires information of state of charge of the electrical storage system ESS, the inside temperature of the storage compartment of the refrigerator arrangement R, power output of the electrical motor-generator EMG, as well as information of brake demand from the braking system 2. Communication between the control unit and the other components of the hybrid electric propulsion system is transmitted via electrical signal lines 9, implemented for example by a CAN bus. Electrical power to and from the electrical motor-generator EMG, the electrical storage system ESS, and the refrigerator arrangement R is transmitted via electrical power lines 8.

The inventive function of the control unit CU of the inventive vehicle is illustrated in a simplified manner in fig. 2, which displays a diagram having on the left Y-axis the temperature of the storage compartment of the refrigerator arrangement R, on the right Y-axis the state of charge of the electrical storage system ESS, and time t on the X-axis. The temperature axis comprises three levels, $T_{MAX}$, $T_{HIGH}$ and $T_{LOW}$. $T_{MAX}$ indicates a maximal allowable temperature level of the storage container, and all means should be taken to keep an actual temperature level 18 below $T_{MAX}$, including driving the refrigerator arrangement R by means of the main power unit 1. $T_{HIGH}$ indicates a temperature level where the heat pump of the refrigerator arrangement R should be started to reduce the temperature of the storage compartment, and $T_{LOW}$ indicates a temperature level where the heat pump of the refrigerator arrangement R should be stopped because a sufficiently low temperature has been attained within the storage compartment. The state of charge axis comprises a level indicating an upper state of charge $U_{SOC}$ of the electrical storage system ESS. $U_{SOC}$ is a charge level that should not be exceeded. For example, depending on what type of articles the vehicle is specified to transport, $T_{MAX}$ can be set to -16° C, $T_{HIGH}$ can be set to -18° C, $T_{LOW}$ can be set to -20° C, and $U_{SOC}$ can be set to 80%. Fig. 2 further displays the actual temperate level 18 of the storage compartment over time, as well as the actual state of charge level 19 over time.

Starting at time $t_1$, the actual temperature level 18 is $T_{LOW}$ in the given example, and the actual state of charge level 19 is below $U_{SOC}$, the electrical storage system ESS thus still accepts further charging. Over time, actual temperature level 18 increases, partly due to heat transfer between the storage compartment and the external environment, and at time $t_2$, the actual temperature level 18 has reached $T_{HIGH}$, and the control unit CU consequently starts the heat pump of the refrigerator arrangement R. In this first embodiment of the invention, the heat pump is electrically operated and electrical power is supplied from the electrical storage system ESS, whereby the actual state of charge 19 decreases correspondingly. At time $t_3$, the actual temperature level 18 is reached $T_{LOW}$ again and the heat pump is stopped.

For the purpose of assuring that vehicle potential and kinetic energy is not lost during braking of the vehicle due to the fact that the electrical storage system cannot be further charged, and for the purpose of reducing energy conversion losses associated with the electrical storage system, the control unit CU of the inventive vehicle and method is arranged to, upon registering that braking of the vehicle is demanded, and upon registering that said electrical storage system ESS exhibits an upper state of charge $U_{SOC}$, or has the potential to reach said upper state of charge $U_{SOC}$ by means of regenerative braking during a predicted braking period, use at least part of the energy recovered by means of regenerative braking during a braking period directly following the breaking demand to directly power said refrigerator arrangement R. Directly power should in this context be interpreted as transmitting the energy directly to the refrigerator arrangement R without prior storage in the electrical storage system ESS, such that unnecessary energy conversion in and out of the energy storage system ESS can be avoided.

At time $t_4$, the control unit CU registers a first breaking demand. According to the invention, the control unit CU therefore directly generates an estimation of the amount and rate of regenerated power that will be produced during a predicted first braking period following the first braking demand. The estimation will be based on parameters like vehicle total weight, estimated reduction of vehicle speed during the predicted braking period, estimated reduction of vehicle altitude during the predicted braking period, and the law of conservation of energy. Moreover, factors like energy conversion losses, and required charging profile of the electrical storage system ESS in terms of maximal allowed charging rate to prevent overcharging or overheating the electrical storage system ESS can be taken into account to further enhance the estimation accuracy.

The length of predicted braking period, the estimated reduction of vehicle speed, and the estimated reduction of vehicle altitude during the predicted braking period will be calculated based on current position, delivered for example by a GPS, estimate road profile ahead of the vehicle, vehicle inclination sensor, digital map of the route including road altitude profile, location of traffic lights and road crossings, road signs, speed limits. The traffic situation can also be taken into account, for example by means of sensors, such as radar, LIDAR(Light Detection And Ranging), and ultrasonic sensors for measuring distance and relative speed to surrounding vehicles. In case the vehicle is currently operated by a driving assistance system, information relating to the braking demand can be directly obtained from the driving assistance system.

Thereafter, the control unit checks if the actual state of charge level 19 is at the level of the upper state of charge $U_{SOC}$, or if the actual state of charge level 19 has the potential to reach the upper state of charge $U_{SOC}$ by means of regenerative braking during the predicted braking period. At time $t_4$, the control unit determines that the actual state of charge level 19 is not at the level of the upper state of charge $U_{SOC}$, and that the actual state of charge level 19 did not have the potential to reach the upper state of charge $U_{SOC}$ by means of regenerative braking during the predicted braking period. Consequently, no energy recovered by means of regenerative braking during a first braking period BP1 following the braking demand at time $t_4$ is used to directly power the refrigerator arrangement R. Time $t_5$ indicates the end of the first braking period BP1, during which all energy recovered by means of regenerative braking was routed to the electrical storage system ESS, thus increasing the state of charge of the electrical storage system ESS.

At time $t_6$, the control unit CU registers a second breaking demand. The control unit determines that the actual state of charge level 19 is not at the level of the upper state of charge $U_{SOC}$, but that the actual state of charge 19 has the potential to reach the upper state of charge $U_{SOC}$ by means of regenerative braking during the predicted braking period. Consequently, the control unit CU controls the electrical storage system ESS and the refrigerator arrangement R such that at least part of the energy recovered by means of regenerative braking during a second braking period BP2 following the braking demand at time $t_6$ is used to directly power the refrigerator arrangement R. The actual temperature level 18 thus decreases during the time of operation of the heat pump of the refrigerator arrangement R down to a level below $T_{LOW}$. Moreover, during this second braking period BP2, the actual state of charge level 19 increases but with a smaller rate that during the first braking period due to another distribution ratio of the regenerated electrical energy. The reason for this behaviour is that the electrical motor of the refrigerator arrangement R cannot accept the complete amount of regenerated electrical power, so part of the electrical power is routed to the electrical storage system ESS. The distribution of electrical power between different power receivers will be discussed more in detail below. At time $t_8$, the second braking period BP2 is over and actual temperature level 18 starts increasing again and the actual state of charge level 19 remains constant until time $t_{11}$.

For the purpose of showing the effect of a part of the invention, two dotted lines has been included in fig. 2 from time $t_6$ to $t_{11}$, indicating a fictive temperature level 20 and a fictive state of charge level 21 for a system according to prior art that does not determine if the actual state of charge level 18 has the potential to reach said upper state of charge $U_{SOC}$ during the predicted braking period, thus a system that does not determine if the actual state of charge 18 has the potential to reach said upper state of charge $U_{SOC}$ during the predicted braking period. As illustrated, due to the large amount of regenerated energy supplied to the electrical storage system ESS, the fictive state of charge will reach the upper state of charge $U_{SOC}$ already at time $t_7$, thus before the end of the second braking period BP2. Since the control unit CU prevents any further charging of the electrical storage system ESS at this time point, the remaining braking energy available between times $t_7$ to $t_8$ will be consumed by the friction brakes. Subsequently, at time $t_9$, the fictive temperature level 20 has reached $T_{HIGH}$ and the refrigerator arrangement R must be powered with electrical power from the electrical storage system ESS, whereby the fictive state of charge level 21 decreases to a level below the actual state of charge level 19. Important to notice here is that the electrical storage system ESS is both charged and discharged in the time period between $t_6$ to $t_{11}$ in the fictive mode, whereas the electrical storage system ESS is only charged once in the mode according to the invention. The inventive vehicle and method thus reduces energy conversion losses associated with charging and discharging of the electrical storage system ESS.

The diagram in fig. 2 must be interpreted as a simplified behaviour of the inventive system, which only comprises two electrical receivers in form of the electrical storage system ESS and the refrigerator arrangement R, a single regenerative power device in form of the electrical motor-generator EMG, and where non-linear effects of components, processes, charging profiles, over time varying regenerated power level, etc., have not been taken into account. The inventive vehicle and method however is equally applicable when multiple regenerative braking devices, such as brake generators, or electrical retarders, are used to recover energy during said braking period, and where more than two power receivers are included in the system.

In case the control unit CU determines that at least part of the regenerated energy should be routed directly to the refrigerator arrangement R, and the electrical storage system ESS does not exhibit the upper state of charge, the control unit must determine a distribution of the regenerated energy between the electrical storage system ESS and the refrigerator arrangement R. The invention solves this issue by means of a distribution system that determines a time-dependent distribution of said energy recovered by means of regenerative braking to said refrigerator arrangement R and said electrical storage system ESS. The refrigerator arrangement R is associated with a refrigerator arrangement distribution parameter, and said electrical storage system is associated with an electrical storage system distribution parameter, wherein an accumulated value of each distribution parameter of the distribution system should correspond to 100%. The relationship between said refrigerator arrangement distribution parameter and said electrical storage system distribution parameter is a function of at least one of the following aspects: actual state of charge level 19, actually recovered power by regenerative braking, predicted recovered power as a function of time during said predicted braking period, actual temperature level 18 in the refrigerator storage compartment, required charging profile of the electrical storage system ESS, and rated output power of an electrical motor of the refrigerator arrangement R in case of electrically operated refrigerator arrangement R. However, if a particular power receiver ESS, R cannot accept all recovered electrical power according to the distribution parameter of that particular power receiver ESS, R, the distribution system will be adjusted accordingly, such that that particular power received will be accorded a reduced distribution parameter, for the purpose of reducing power losses during regenerative braking.

As an example of distribution parameters, the refrigerator arrangement distribution parameter is set to be larger than said electrical storage system distribution parameter when the actual temperature level 18 of the refrigerator compartment is lying between the max temperature level $T_{MAX}$ and the high temperature level $T_{HIGH}$. For example, in such a situation, the refrigerator arrangement distribution parameter is set to 100%, and the electrical storage system distribution parameter is set to 0%. However, the refrigerator arrangement distribution parameter is set to 50% and the electrical storage system distribution parameter is set to 50% when the actual temperature level 18 of the refrigerator compartment is lower than said high temperature level $T_{HIGH}$.

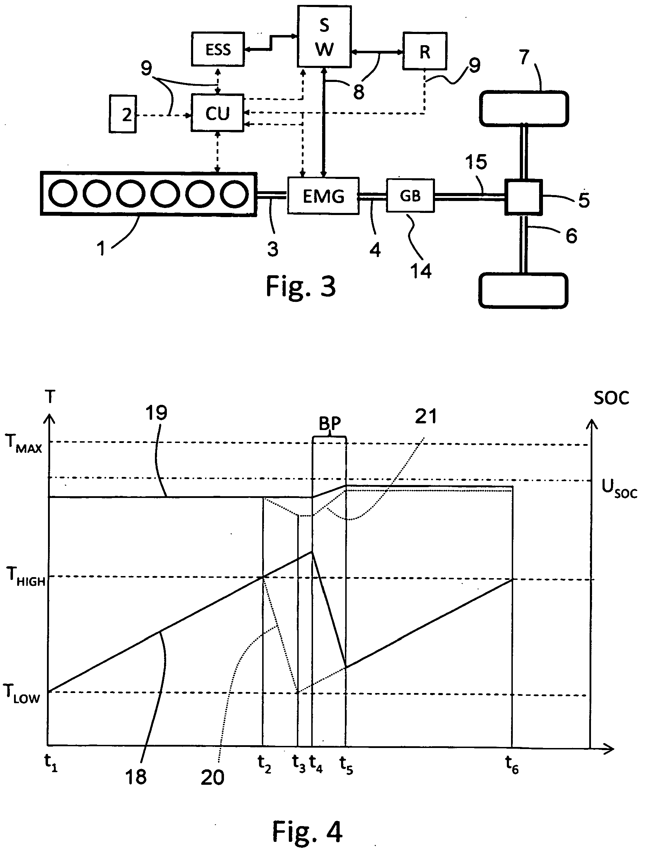

The distribution of regenerated electrical energy is controlled by the control unit CU, which controls the management system of the electrical storage system ESS, as well as the electrical motor of the refrigerator arrangement. Alternatively, as illustrated in fig. 3, a single electrical switching device SW is connected to the electrical motor-generator EMG, the electrical storage system ESS, and the refrigerator arrangement R, wherein the switching device SW distributes electrical power between said electrical components according to the control signals of the control unit CU. This has the advantage that only a single switching device must be controlled, and that the remaining electrical components can be of a more simple design, without integrated power electronics.

Fig. 4 illustrates a further advantageous effect of the invention, wherein operation of the refrigeration arrangement R preferably is postponed upon prediction that braking of the vehicle will be demanded within a certain time period. The axes of diagram in fig. 4 is essentially identical to the axes of the diagram in fig. 2, and starting with the actual temperature level 18 at $T_{LOW}$ and actual state of charge 19 below upper state of charge $U_{SOC}$ at time $t_1$. At time $t_2$, the actual temperature level 18 has reached $T_{HIGH}$ and operation of the refrigeration arrangement R should normally be started. However, according to the inventive vehicle and method, the control unit is arranged to, upon registering that cooling of the refrigerator compartment is required, and upon prediction that braking of the vehicle will be demanded within a certain time period, inhibit operation of the refrigerator arrangement R by means of electrical energy from said electrical storage system ESS until energy recovered by means of regenerative braking during the predicted braking period can be used instead to directly power said refrigerator arrangement R. In fig. 4, such a scenario is illustrated. At time $t_2$, the control unit CU predicts, based on similar grounds as used for predicting the braking period after registering a braking demand, that a braking demand will be received within a certain time period, which is set according to the requirements of the specific application. For example, the time period can be set by means of a predetermined fixed time period, or such that the actual temperature level is estimated not to exceed above the max temperature level $T_{MAX}$. Setting of the time period is preferably also made taking into account the estimated amount of regenerated energy during the predicted braking period. In the illustrated example of fig. 4, the control unit CU decides to postpone the operation of the refrigeration arrangement R. Later, at time $t_4$, a demand for braking of the vehicle is registered. The control unit CU distributes the regenerated energy to both the refrigerator arrangement R and the electrical storage system ESS simultaneously, and therefore the actual temperature level 18 decreases and the actual state of charge level 19 increases during the braking period that ends at time $t_5$. Since the actual temperature level 18 is below $T_{HIGH}$ at time $t_5$, the control unit does not continue operation of the refrigerator arrangement R by means of electricity from the electrical storage system ESS. Hence, the actual state of charge level 19 remains constant until time $t_6$, when the actual temperature again has reached $T_{HIGH}$.

To visualize the advantageous effect of this part of the invention, an inventive system without this improvement is also illustrated using dotted lines in fig. 4 representing a fictive mode. The operation of the refrigerator arrangement.is then initiated at time $t_2$ because actual temperature level has reached $T_{HIGH}$. The refrigerator arrangement operation period ends at $t_3$, and at $t_4$ the braking demand is registered. The fictive state of charge level 21 decreases between time $t_2$ to $t_3$ due to operation of the refrigerator arrangement R, it remains constant between $t_3$ to $t_4$, and subsequently increases as regenerated breaking energy is supplied to the electrical storage system ESS during the braking period. The regenerated energy is supplied solely to the electrical storage system ESS during said braking period because the control unit CU determines that the fictive state of charge 19 at time $t_4$ does neither exhibit the upper state of charge $U_{SOC}$, nor does it have the potential to reach said upper state of charge $U_{SOC}$ by means of regenerative braking during the predicted braking period. As a consequence of the discharge of the electrical storage system ESS between time $t_2$ to $t_3$, and the strong charge between $t_4$ to $t_5$ in the fictive mode, higher energy conversion losses occurs in the fictive mode compared to the method where operation is postponed, in which only a single less strong charge of the electrical storage system ESS is performed. This part of the invention thus leads to reduced losses in the hybrid electric vehicle propulsion system.

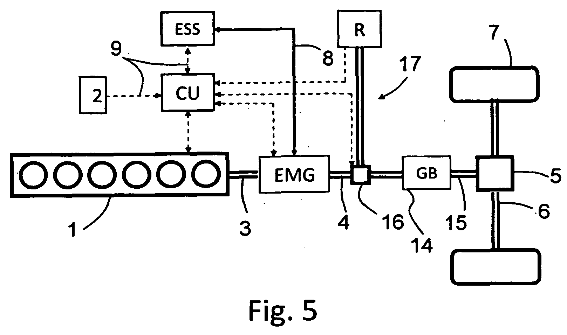

The described first embodiment of the invention utilizes an electrically operated refrigerator arrangement R. According to a second embodiment of the invention, as disclosed in fig. 5, the heat pump of the refrigerator arrangement R is powered by means of a mechanical power transfer arrangement 17, which drivingly connects the refrigerator arrangement R with a drive wheel assembly of the vehicle. The mechanical power transfer arrangement 17 can be implemented in several ways, such as by means of a chain drive, belt drive, shaft drive, or gear set drive between the drive wheel assembly and the refrigerator arrangement R. The heat pump is thus not connected to the electrical storage system ESS in this embodiment. Distribution of regenerated energy is here for example conducted by means of a clutch unit 16 that can transfer part of the regenerated energy to the refrigerator arrangement R, which part is determined by the control unit CU. Another more complex but more efficient solution is based on a differential gear unit that routes part of the regenerated energy to the refrigerator arrangement R, while the rest will be converted to electrical energy by the electrical motor-generator EMG, and subsequently stored in the electrical storage system ESS.

As will be realised, the invention is capable of modification in various obvious respects, all without departing from the scope of the appended claims. Accordingly, the drawings and the description thereto are to be regarded as illustrative in nature, and not restrictive.

Table of references:

| R | Refrigerator arrangement |
|---|---|
| CU | Control unit |
| EMG | Electrical motor-generator |
| ESS | Electrical storage system |
| SW | Switching device |
| GB | Gearbox |
| $U_{SOC}$ | Upper state of charge |
| BP1 | Breaking period 1 |
| BP2 | Breaking period 2 |
| 1 | Main power unit |
| 2 | Braking system |
| 3 | First shaft |
| 4 | Second shaft |
| 5 | Differential gear unit |
| 6 | Drive shaft |
| 7 | Drive wheel |
| 8 | Electrical power lines |
| 9 | Electrical signal line |
| 15 | Output shaft |
| 16 | Clutch unit |
| 17 | Mechanical power transfer arrangement |
| 18 | Actual temperature level |
| 19 | Actual state of charge level |
| 20 | Fictive temperature level |
| 21 | Fictive state of charge level |

**Claims**

1. A vehicle comprising a refrigerator arrangement (R) and a hybrid electric propulsion system having a control unit (CU), a main power unit (1), an electrical motor-generator (EMG) and an electrical storage system (ESS), and where said control unit (CU) is arranged to, upon registering a vehicle braking demand, and upon registering that said electrical storage system (ESS) exhibits an upper state of charge ($U_{SOC}$), or has the potential to reach said upper state of charge ($U_{SOC}$) by means of regenerative braking during a predicted braking period, use at least part of the energy recovered by means of regenerative braking during a braking period following said braking demand to directly power said refrigerator arrangement (R), **characterized in that** said electrical storage system (ESS) is estimated to reach said upper state of charge ($U_{SOC}$) by means of regenerative braking during said predicted braking period, if a predicted amount of electrical energy converted from vehicle kinetic and/or potential energy during said predicted braking period by means of at least said electrical motor-generator (EMG) equals or exceeds the predicted amount of electrical energy necessary to charge said electrical storage system (ESS) to exhibit said upper state of charge ($U_{SOC}$) at the end of said predicted braking period.

2. The vehicle according to claim 1, **characterized in that** said predicted amount of electrical energy converted from vehicle kinetic and/or potential energy is calculated based on vehicle total weight and reduction of vehicle speed during said predicted braking period, and/or vehicle total weight and reduction of vehicle altitude during said predicted braking period, and preferably including energy conversion losses.

3. The vehicle according to any of the previous claims, **characterized in that** said predicted amount of electrical energy necessary to charge said electrical storage system (ESS) to exhibit said upper state of charge ($U_{SOC}$) at the end of said predicted braking period is calculated based on at least a state of charge of the electrical storage system (ESS) at the beginning of said braking period, and preferably also a required charging profile of the electrical storage system (ESS).

4. The vehicle according to any of the previous claims, **characterized in that** said control unit (CU) comprises a distribution system that determines a time-dependent distribution of said energy recovered by means of regenerative braking to at least said refrigerator arrangement (R) and said electrical storage system (ESS), wherein said refrigerator arrangement (R) is associated with a refrigerator arrangement distribution parameter, and said electrical storage system is associated with an electrical storage system distribution parameter, and wherein the relationship between said refrigerator arrangement distribution parameter and said electrical storage system distribution parameter is a function of at least one of the following aspects: actual state of charge of the electrical storage system (ESS), actually recovered power, predicted recovered power as a function of time during said predicted braking period, temperature in refrigerator storage compartment, required charging profile of the electrical storage system (ESS), and rated output power of an electrical motor of the refrigerator arrangement (R).

5. The vehicle according to claim 4, **characterized in that** said control unit (CU) comprises a first parameter corresponding to a max temperature level ($T_{MAX}$) of the refrigerator compartment, and a second parameter corresponding to a high temperature level ($T_{HIGH}$) of the refrigerator compartment, wherein said refrigerator arrangement distribution parameter being larger than said electrical storage system distribution parameter when the actual temperature (18) of the refrigerator compartment is lying between said max temperature level ($T_{MAX}$) and said high temperature level ($T_{HIGH}$), and wherein said refrigerator arrangement distribution parameter is equal to said electrical storage system distribution parameter when the actual temperature (18) of the refrigerator compartment is lower than said high temperature level ($T_{HIGH}$).

6. The vehicle according to any of claims 4 or 5, **characterized in that** if a power receiver (ESS, R) cannot accept all recovered electrical power according to the distribution parameter of that power receiver (ESS, R), the distribution system will be adjusted accordingly.

7. The vehicle according to any of the previous claims, **characterized in that** said vehicle comprises additional regenerative braking devices that are arranged to recover energy during said braking period, such as brake generators, or electrical retarders.

8. The vehicle according to any of the previous claims, **characterized in that** said refrigerator arrangement (R) is electrically operable, and powered with electrical energy generated by means of at least regenerative braking by at least said electrical motor-generator (EMG).

9. The vehicle according to any of the previous claims, **characterized in that** said energy recovered by means of said regenerative braking that directly powers said refrigerator arrangement (R) is not stored in said electrical storage system (ESS) before being distributed to said refrigerator arrangement (R).

10. The vehicle according to any of claims 1 to 7, **characterized in that** said vehicle comprises a drive wheel assembly, and **in that** said refrigerator arrangement (R) is connected to said drive wheel assembly by means of a mechanical power transfer arrangement, such as a chain drive, belt drive, shaft drive, or gear set drive, for powering said refrigerator arrangement (R) with energy recovered by means of regenerative braking.

11. The vehicle according to any of the previous claims, **characterized in that** said hybrid electric propulsion system further has an electrical switching device (SW) connected to said electrical motor-generator (EGM), said electrical storage system (ESS), and said refrigerator arrangement (R), for distributing electrical power between said electrical motor-generator (EMG), said electrical storage system (ESS), and said refrigerator arrangement (R).

12. The vehicle according to any of the previous claims, **characterized in that** said control unit (CU) is arranged to, upon registering that cooling of the refrigerator compartment is required, and upon prediction that braking of the vehicle will be demanded within a certain time period, inhibit operation of the refrigerator arrangement (R) by means of electrical energy from said electrical storage system (ESS) until energy recovered by means of regenerative braking during said braking period can be used to directly power said refrigerator arrangement (R).

13. A method for controlling energy recovered by means of regenerative braking during a braking period of a vehicle comprising an refrigerator arrangement (R) and a hybrid electric propulsion system having a control unit (CU), a main power unit, an electrical motor-generator (EMG) and an electrical storage system (ESS), **characterized by** the steps of:

- registering a vehicle braking demand;
- registering that said electrical storage system (ESS) exhibits an upper state of charge ($U_{SOC}$), or has the potential to reach said upper state of charge ($U_{SOC}$) during a predicted braking period;
- estimating said upper state of charge ($U_{SOC}$) to be reached by means of regenerative braking during said predicted braking period, if a predicted amount of electrical energy converted from vehicle kinetic and/or potential energy during said predicted braking period by means of at least said electrical motor-generator (EMG) equals or exceeds the predicted amount of electrical energy necessary to charge said electrical storage system (ESS) to exhibit said upper state of charge ($U_{SOC}$) at the end of said predicted braking period;
- controlling energy recovered by means of regenerative braking during a braking period following said braking demand, such that at least part of said energy is used to directly power said refrigerator arrangement (R).

**Patentansprüche**

1. Fahrzeug, das eine Kältemaschinenanordnung (R) und ein Hybridelektroantriebssystem mit einer Steuereinheit (CU), einer Hauptleistungseinheit (1), einem Elektromotor-Generator (EMG) und einem elektrischen Speichersystem (ESS) umfasst, und wobei die Steuereinheit (CU) so konfiguriert ist, dass sie, nach Registrierung einer Fahrzeugbremsanforderung, und nach Registrierung, dass das elektrische Speichersystem (ESS) einen oberen Ladungszustand ($U_{SOC}$) aufweist, oder das Potential hat, den oberen Ladungszustand ($U_{SOC}$) mittels regenerativen Bremsens während einer vorhergesagten Bremsperiode zu erreichen, wenigstens einen Teil der mittels regenerativen Bremsens während einer auf die Bremsanforderung folgenden Bremsperiode zurückgewonnenen Energie verwendet, um die Kältemaschinenanordnung (R) direkt anzutreiben, **dadurch gekennzeichnet, dass** geschätzt wird, dass das elektrische Speichersystem (ESS) den oberen Ladungszustand ($U_{SOC}$) mittels regenerativen Bremsens während der vorhergesagten Bremsperiode erreicht, falls ein vorhergesagter Betrag an aus kinetischer und/oder potentieller Energie des Fahrzeugs während der vorhergesagten Bremsperiode mittels wenigstens dem Elektromotor-Generator (EMG) umgewandelter elektrischer Energie dem vorhergesagten Betrag an elektrischer Energie, der notwendig ist, um das elektrische Speichersystem (ESS) so aufzuladen, dass es am Ende der vorhergesagten Bremsperiode den oberen Ladungszustand ($U_{SOC}$) aufweist, gleichkommt oder ihn übersteigt.

2. Fahrzeug nach Anspruch 1, **dadurch gekennzeichnet, dass** der vorhergesagte Betrag an aus kinetischer und/oder potentieller Energie des Fahrzeugs umgewandelter elektrischer Energie basierend auf dem Fahrzeuggesamtgewicht und der Fahrzeuggeschwindigkeitsreduzierung während der vorhergesagten Bremsperiode, und/oder dem Fahrzeuggesamtgewicht und der Fahrzeughöhenreduzierung während der vorhergesagten Bremsperiode, und vorzugsweise einschließlich der Energieumwandlungsverluste berechnet wird.

3. Fahrzeug nach irgendeinem der vorhergehenden Ansprüche, **dadurch gekennzeichnet, dass** der vorhergesagte Betrag an elektrischer Energie, der notwendig ist, um das elektrische Speichersystem (ESS) so aufzuladen, dass es am Ende der vorhergesagten Bremsperiode den oberen Ladungszustand ($U_{SOC}$) aufweist, basierend auf wenigstens einem Ladungszustand des elektrischen Speichersystems (ESS) am Anfang der Bremsperiode, und vorzugsweise auch eine erforderlichen Ladungsprofil des elektrischen Speichersystems (ESS) berechnet wird.

4. Fahrzeug nach irgendeinem der vorhergehenden Ansprüche, **dadurch gekennzeichnet, dass** die Steuereinheit (CU) ein Verteilungssystem umfasst, das eine zeitabhängige Verteilung der mittels regenerativen Bremsens zurückgewonnenen Energie auf wenigstens die Kältemaschinenanordnung (R) und das elektrische Speichersystem (ESS) bestimmt, wobei die Kältemaschinenanordnung (R) einem Kältemaschinenanordnungs-Verteilungsparameter zugeordnet ist, und das elektrische Speichersystem einem Elektrospeichersystem-Verteilungsparameter zugeordnet ist, und wobei die Beziehung zwischen dem Kältemaschinenanordnungs-Verteilungsparameter und dem Elektrospeichersystem-Verteilungsparameter eine Funktion von wenigstens einem der folgenden Aspekte ist: tatsächlicher Ladungszustand des elektrischen Speichersystems (ESS), tatsächlich zurückgewonnene Energie, vorhergesagte zurückgewonnene Energie als Funktion der Zeit während der vorhergesagten Bremsperiode, Temperatur im Kühllagerraum, erforderliches Ladungsprofil des elektrischen Speichersystem (ESS), und Nennausgangsleistung eines Elektromotors der Kältemaschinenanordnung (R).

5. Fahrzeug nach Anspruch 4, **dadurch gekennzeichnet, dass** die Steuereinheit (CU) einen einem maximalen Temperaturniveau ($T_{MAX}$) des Kühlraums entsprechenden ersten Parameter, und einen einem Hochtemperaturniveau ($T_{HIGH}$) des Kühlraums entsprechenden zweiten Parameter umfasst, wobei der Kältemaschinenanordnungs-Verteilungsparameter größer als der Elektrospeichersystem-Verteilungsparameter ist, wenn die tatsächliche Temperatur (18) des Kühlraums zwischen dem maximalen Temperaturniveau ($T_{MAX}$) und dem Hochtemperaturniveau ($T_{HIGH}$) liegt, und wobei der Kältemaschinenanordnungs-Verteilungsparameter gleich dem Elektrospeichersystem-Verteilungsparameter ist, wenn die tatsächliche Temperatur (18) des Kühlraums niedriger als das Hochtemperaturniveau ($T_{HIGH}$) ist.

6. Fahrzeug nach irgendeinem der Ansprüche 4 oder 5, **dadurch gekennzeichnet, dass**, falls ein Energieempfänger (ESS, R) nicht die gesamte zurückgewonnene elektrische Energie gemäß dem Verteilungsparameter dieses Energieempfängers (ESS, R) aufnehmen kann, das Verteilungssystem demgemäß angepasst wird.

7. Fahrzeug nach irgendeinem der vorhergehenden Ansprüche, **dadurch gekennzeichnet, dass** das Fahrzeug zusätzliche regenerative Bremsvorrichtungen umfasst, die dazu konfiguriert sind, Energie während der Bremsperiode zurückzugewinnen, wie etwa Bremsgeneratoren, oder elektrische Verzögerer.

8. Fahrzeug nach irgendeinem der vorhergehenden Ansprüche, **dadurch gekennzeichnet, dass** die Kältemaschinenanordnung (R) elektrisch betreibbar ist, und mit elektrischer Energie angetrieben wird, die mittels wenigstens regenerativen Bremsens durch wenigstens den Elektromotor-Generator (EMG) erzeugt wird.

9. Fahrzeug nach irgendeinem der vorhergehenden Ansprüche, **dadurch gekennzeichnet, dass** die mittels des regenerativen Bremsens zurückgewonnene Energie, die die Kältemaschinenanordnung (R) direkt antreibt, nicht in dem elektrischen Speichersystem (ESS) gespeichert wird, bevor sie auf die Kältemaschinenanordnung (R) verteilt wird.

10. Fahrzeug nach irgendeinem der Ansprüche 1 bis 7, **dadurch gekennzeichnet, dass** das Fahrzeug eine Antriebsradanordnung umfasst, und dass die Kältemaschinenanordnung (R) mit der Antriebsradanordnung mittels einer Anordnung zur Übertragung mechanischer Leistung, wie etwa einem Kettenantrieb, einem Riemenantrieb, einem Wellenantrieb oder einem Zahnradsatzantrieb, verbunden ist, um die Kältemaschinenanordnung (R) mit mittels regenerativen Bremsens zurückgewonnener Energie anzutreiben.

11. Fahrzeug nach irgendeinem der vorhergehenden Ansprüche, **dadurch gekennzeichnet, dass** das Hybridelektroantriebssystem weiterhin eine elektrische Schaltvorrichtung (SW) aufweist, die zur Verteilung elektrischer Energie zwischen dem Elektromotor-Generator (EMG), dem elektrischen Speichersystem (ESS) und der Kältemaschinenanordnung (R) mit dem Elektromotor-Generator (EMG), dem elektrischen Speichersystem (ESS) und der Kältemaschinenanordnung (R) verbunden ist.

12. Fahrzeug nach irgendeinem der vorhergehenden Ansprüche, **dadurch gekennzeichnet, dass** die Steuereinheit (CU) dazu konfiguriert ist, nach Registrierung, dass ein Kühlen des Kühlraums erforderlich ist, und nach Vorhersage, dass innerhalb eines gewissen Zeitraums ein Bremsen des Fahrzeugs verlangt werden wird, den Betrieb der Kältemaschinenanordnung (R) mittels elektrischer Energie von dem elektrischen Speichersystem (ESS) zu verhindern, bis mittels regenerativen Bremsens während der Bremsperiode zurückgewonnene Energie verwendet werden kann, um die Kältemaschinenanordnung (R) direkt anzutreiben.

13. Verfahren zur Steuerung von mittels regenerativen Bremsens während einer Bremsperiode eines Fahrzeugs zurückgewonnener Energie, das eine Kältemaschinenanordnung (R) und ein Hybridelektroantriebssystem mit einer Steuereinheit (CU), einer Hauptleistungseinheit, einem Elektromotor-Generator (EMG) und einem elektrischen Speichersystem (ESS) umfasst, **gekennzeichnet durch** die Schritte:

   - Registrieren einer Fahrzeugbremsanforderung;
   - Registrieren, dass das elektrische Speichersystem (ESS) einen oberen Ladungszustand

($U_{SOC}$) aufweist, oder das Potential hat, den oberen Ladungszustand (Usoc) während einer vorhergesagten Bremsperiode zu erreichen,

- Schätzen, dass der obere Ladungszustand ($U_{SOC}$) mittels regenerativen Bremsens während der vorhergesagten Bremsperiode erreicht wird, falls ein vorhergesagter Betrag an aus kinetischer und/oder potentieller Energie des Fahrzeugs während der vorhergesagten Bremsperiode mittels wenigstens dem Elektromotor-Generator (EMG) umgewandelter elektrischer Energie dem vorhergesagten Betrag an elektrischer Energie, der notwendig ist, um das elektrische Speichersystem (ESS) so aufzuladen, dass es am Ende der der vorhergesagten Bremsperiode den oberen Ladungszustand ($U_{SOC}$) aufweist, gleichkommt oder ihn übersteigt;

- Steuern der mittels regenerativen Bremsens während einer auf die Bremsanforderung folgenden Bremsperiode zurückgewonnenen Energie derart, dass wenigstens eine Teil der Energie verwendet wird, um die Kältemaschinenanordnung (R) direkt anzutreiben.

## Revendications

1.  Véhicule comprenant un agencement de réfrigérateur (R) et un système de propulsion électrique hybride ayant une unité de commande (CU), une unité d'alimentation principale (1), un moteur-générateur électrique (EMG) et un système de stockage électrique (ESS), et où ladite unité de commande (CU) est agencée, lors de l'enregistrement d'une demande de freinage de véhicule et lors de l'enregistrement du fait que ledit système de stockage électrique (ESS) présente un état de charge supérieur ($U_{SOC}$) ou a le potentiel pour atteindre ledit état de charge supérieur ($U_{SOC}$) au moyen d'un freinage par récupération au cours d'une période de freinage prédite, pour utiliser au moins une partie de l'énergie récupérée au moyen d'un freinage par récupération au cours d'une période de freinage à la suite de ladite demande de freinage pour alimenter directement ledit agencement de réfrigérateur (R), **caractérisé en ce qu'**il est estimé que ledit système de stockage électrique (ESS) est estimé pour atteindre ledit état de charge supérieur ($U_{SOC}$) au moyen d'un freinage par récupération au cours de ladite période de freinage prédite, si une quantité prédite d'énergie électrique convertie d'une énergie cinétique et/ou potentielle de véhicule au cours de ladite période de freinage prédite au moyen d'au moins ledit moteur-générateur électrique (EMG) est supérieure ou égale à la quantité prédite d'énergie électrique nécessaire pour charger ledit système de stockage électrique (ESS) pour présenter ledit état de charge supérieur ($U_{SOC}$) à la fin de ladite période de freinage prédite.

2.  Véhicule selon la revendication 1, **caractérisé en ce que** ladite quantité prédite d'énergie électrique convertie d'une énergie cinétique et/ou potentielle de véhicule est calculée sur la base du poids total de véhicule et de la réduction de vitesse de véhicule au cours de ladite période de freinage prédite et/ou du poids total de véhicule et de la réduction d'altitude de véhicule au cours de ladite période de freinage prédite, et de préférence y compris des pertes par conversion d'énergie.

3.  Véhicule selon l'une des revendications précédentes, **caractérisé en ce que** ladite quantité prédite d'énergie électrique nécessaire pour charger ledit système de stockage électrique (ESS) pour présenter ledit état de charge supérieur (Usoc) à la fin de ladite période de freinage prédite est calculée sur la base d'au moins un état de charge du système de stockage électrique (ESS) au début de ladite période de freinage, et de préférence également d'un profil de charge requis du système de stockage électrique (ESS).

4.  Véhicule selon l'une des revendications précédentes, **caractérisé en ce que** ladite unité de commande (CU) comprend un système de distribution qui détermine une distribution dépendante du temps de ladite énergie récupérée au moyen d'un freinage par récupération à au moins ledit agencement réfrigérateur (R) et ledit système de stockage électrique (ESS), où ledit agencement de réfrigérateur (R) est associé à un paramètre de distribution de l'agencement de réfrigérateur et ledit système de stockage électrique est associé à un paramètre de distribution de système de stockage électrique, et où la relation entre ledit paramètre de distribution d'agencement de réfrigérateur et ledit paramètre de distribution de système de stockage électrique est une fonction d'au moins l'un des aspects suivants : un état de charge réel du système de stockage électrique (ESS), une puissance réellement récupérée, une puissance récupérée prédite en fonction du temps au cours de ladite période de freinage prédite, une température dans le compartiment de stockage de réfrigérateur, un profil de charge requis du système de stockage électrique (ESS) et une puissance de sortie nominale d'un moteur électrique de l'agencement de réfrigérateur (R).

5.  Véhicule selon la revendication 4, **caractérisé en ce que** ladite unité de commande (CU) comprend un premier paramètre correspondant à un niveau de température maximal ($T_{MAX}$) du compartiment de réfrigérateur et un deuxième paramètre correspondant à un niveau de température élevé ($T_{HIGH}$) du compartiment de réfrigérateur, où ledit paramètre de distribution d'agencement de réfrigérateur étant supérieur audit paramètre de distribution de système de stockage électrique lorsque la température réelle (18) du compartiment de réfrigérateur est comprise entre ledit niveau de température maximal ($T_{MAX}$) et ledit niveau de température élevé ($T_{HIGH}$), et où ledit paramètre de distribution d'agencement de réfrigérateur est égal audit paramètre de distribution de système de stockage électrique lorsque la température réelle (18) du compartiment de réfrigérateur est inférieure audit niveau de température élevé ($T_{HIGH}$).

6. Véhicule selon l'une des revendications 4 ou 5, **caractérisé en ce que**, si un récepteur de puissance (ESS, R) ne peut pas accepter toute la puissance électrique récupérée selon le paramètre de distribution de ce récepteur de puissance (ESS, R), le système de distribution sera ajusté en conséquence.

7. Véhicule selon l'une des revendications précédentes, **caractérisé en ce que** ledit véhicule comprend des dispositifs de freinage par récupération supplémentaires qui sont agencés pour récupérer l'énergie au cours de ladite période de freinage, tels que des générateurs de freinage ou des ralentisseurs électriques.

8. Véhicule selon l'une des revendications précédentes, **caractérisé en ce que** ledit agencement de réfrigérateur (R) peut fonctionner électriquement et est alimenté avec l'énergie électrique générée au moyen d'au moins le freinage par récupération par au moins ledit moteur-générateur électrique (EMG).

9. Véhicule selon l'une des revendications précédentes, **caractérisé en ce que** ladite énergie récupérée au moyen dudit freinage par récupération qui alimente directement ledit agencement de réfrigérateur (R) n'est pas stockée dans ledit système de stockage électrique (ESS) avant d'être distribuée audit agencement de réfrigérateur (R).

10. Véhicule selon l'une des revendications 1 à 7, **caractérisé en ce que** ledit véhicule comprend un ensemble roue motrice et **en ce que** ledit agencement de réfrigérateur (R) est relié audit ensemble roue motrice au moyen d'un agencement de transfert de puissance mécanique, tel qu'une transmission par chaîne, une transmission par courroie, une transmission par arbre ou une transmission par train d'engrenages, pour alimenter ledit agencement de réfrigérateur (R) avec l'énergie récupérée au moyen d'un freinage par récupération.

11. Véhicule selon l'une des revendications précédentes, **caractérisé en ce que** ledit système de propulsion électrique hybride a en outre un dispositif de commutation électrique (SW) relié audit moteur-générateur électrique (EGM), audit système de stockage électrique (ESS) et audit agencement de réfrigérateur (R) pour distribuer une puissance électrique entre ledit moteur-générateur électrique (EMG), ledit système de stockage électrique (ESS) et ledit agencement de réfrigérateur (R).

12. Véhicule selon l'une des revendications précédentes, **caractérisé en ce que** ladite unité de commande (CU) est agencée, lors de l'enregistrement du fait qu'un refroidissement du compartiment de réfrigérateur est requis et lors de la prédiction du fait qu'un freinage du véhicule sera demandé pendant une certaine période de temps, pour empêcher le fonctionnement de l'agencement de réfrigérateur (R) au moyen d'une énergie électrique provenant dudit système de stockage électrique (ESS) jusqu'à ce que l'énergie récupérée au moyen d'un freinage par récupération au cours de ladite période de freinage puisse être utilisée pour alimenter directement ledit agencement de réfrigérateur (R).

13. Procédé pour commander l'énergie récupérée au moyen d'un freinage par récupération au cours d'une période de freinage d'un véhicule comprenant un agencement de réfrigérateur (R) et un système de propulsion électrique hybride ayant une unité de commande (CU), une unité d'alimentation principale, un moteur-générateur électrique (EMG) et un système de stockage électrique (ESS), **caractérisé par** les étapes qui consistent :

    - à enregistrer une demande de freinage de véhicule ;
    - à enregistrer le fait que ledit système de stockage électrique (ESS) présente un état de charge supérieur ($U_{SOC}$) ou a le potentiel pour atteindre ledit état de charge supérieur ($U_{SOC}$) au cours d'une période de freinage prédite ;
    - à estimer ledit état de charge supérieur (Usoc) à atteindre au moyen d'un freinage par récupération au cours de ladite période de freinage prédite, si une quantité prédite d'énergie électrique convertie d'une énergie cinétique et/ou potentielle de véhicule au cours de ladite période de freinage prédite au moyen d'au moins ledit moteur-générateur électrique (EMG) est supérieure ou égale à la quantité prédite d'énergie électrique nécessaire pour charger ledit système de stockage électrique (ESS) pour présenter ledit état de charge supérieur (Usoc) à la fin de ladite période de freinage prédite ;
    - à commander l'énergie récupérée au moyen d'un freinage par récupération au cours d'une période de freinage à la suite de ladite demande de freinage, de sorte qu'au moins une partie de ladite énergie soit utilisée pour alimenter directement ledit agencement de réfrigérateur (R).

Fig. 1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009087552 A

- EP 1935712 A